# EUROPÄISCHE PATENTSCHRIFT

(11) **EP 1 422 082 B1**
(45) Veröffentlichungstag und Bekanntmachung des Hinweises auf die Patenterteilung: **25.01.2006**
(21) Anmeldenummer: 03024417.2
(22) Anmeldetag: 21.10.2003
(51) Int. Cl.: B60H 1/00

(54) **Bedienungseinrichtung für eine Fahrzeug-Klimaautomatik**
Control device for vehicle automatic air-conditioning system
Dispositif de commande pour système automatique de climatisation pour véhicule

(30) Priorität: 20.11.2002 DE 10254112
(43) Veröffentlichungstag der Anmeldung: 26.05.2004
(73) Patentinhaber: Bayerische Motoren Werke Aktiengesellschaft, 80809 München (DE)
(72) Erfinder: Zemsch, Stefan, Dr., 81373 München (DE); Bierwirth, Karlheinz, Dr., 85604 Zorneding (DE)

(56) Entgegenhaltungen:
- EP-B- 0 818 335
- DE-A- 19 609 589
- DE-A- 19 610 148

## Beschreibung

Die vorliegende Erfindung betrifft eine Bedienungseinrichtung für eine FahrzeugKlimaautomatik gemäß dem Oberbegriff des Patentanspruches 1.

Eine derartige Bedienungseinrichtung ist aus der EP 0 818 335 B1 bekannt.

Aus der DE 44 12 486 C2 ist eine Bedieneinrichtung für eine Klimaautomatik von Fahrzeugen bekannt, bei der für die linke Fahrgastraumseite und für die rechte Fahrgastraumseite jeweils ein separates Bedienelement zum Anwählen einer Soll-Temperatur vorgesehen ist. Im Automatikmodus (Klimaautomatik) der Klimaanlage wird dann automatisch die für den linken bzw. rechten Fahrgastraumbereich angewählte Temperatur eingeregelt.

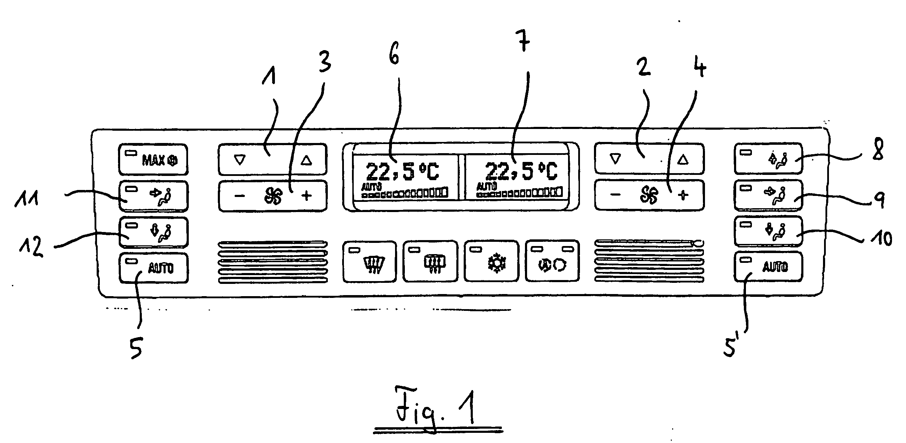

Eine weiterentwickelte Bedieneinrichtung nach dem Stand der Technik ist in Figur 1 dargestellt. Die Klimaanlage ist auch hier "zweikanalig" ausgeführt. Für die linke und die rechte Fahrgastraumseite sind jeweils ein Bedienelement 1, 2 zum Anwählen einer Soll-Temperatur und jeweils ein Bedienelement 3, 4 zum Anwählen eines Luftvolumenstroms für die linke bzw. rechte Fahrgastraumseite vorgesehen. Im Automatikmodus (Klimaautomatik), der durch eine Taste 5 eingeschaltet werden kann, wird die Temperatur im linken und rechten Fahrgastraumbereich automatisch auf den jeweils eingestellten Soll-Wert, der in einem Display 6, 7 abgelesen werden kann, eingeregelt. Bei einer derartigen Klimaanlage ergibt sich im Fahrgastraum eine Temperaturschichtung vom Fußraum über den Oberkörperbereich zum Kopfbereich, die im wesentlichen durch den Regel-Algorithmus der Klimaautomatik vorgegeben ist. Wenn ein Fahrgast mit der automatisch eingeregelten Temperaturschichtung nicht zufrieden ist, kann die Luftverteilung auf die Fußraum-, Oberkörper- und Frontscheibenluftauslässe über Bedienelemente 8 - 12 manuell verändert werden. Bei einer Betätigung der Bedienelemente 8 - 12 wird allerdings der Automatikmodus (Klimaautomatik) verlassen, d.h. die Klimaanlage schaltet in einen Steuerungsmodus um. Der Klimaautomatikbetrieb wird auch dann verlassen, wenn der Fahrgast mit dem eingeregelten Luftvolumenstrom nicht einverstanden ist und den Luftvolumenstrom über die Bedienelemente 3, 4 manuell einstellt. Der einzig mögliche am Bedienpanel einstellbare Klimatisierungsparameter im Automatikmodus ist somit die Temperatur für die linke bzw. rechte Fahrgastraumseite. Ein derartiges Bedienkonzept wird nur dann als optimal empfunden, wenn die für den Automatikmodus implementierte Temperatur-/Luftvolumenstromregelung genau dem Komfortgefühl des Fahrgasts entspricht. Ist dies nicht der Fall, so muß manuell über die Bedienelemente 8-11 eingegriffen werden, was dazu führt, dass vom Automatikmodus in den Steuerungsmodus übergegangen wird. Dies wird insbesondere bei Oberklasse- bzw. Luxusklasse-Fahrzeugen als störend empfunden, da die Gefahr besteht, dass der Fahrgast im Steuerungsmodus durch die Vielzahl der bestehenden Steuerungsmöglichkeiten verwirrt wird.

Bekannt sind ferner Klimaanlagen, bei denen im Automatikmodus für die linke und rechte Fahrgastraumseite jeweils separat eine Soll-Temperatur angewählt werden kann und zusätzlich an einem in der Mitte der Instrumententafel angeordneten Oberkörperluftauslass manuell durch ein Verstellrad die Ausblastemperatur am Oberkörperluftauslass in der Fahrzeugmitte verstellt werden kann. Durch Betätigen des Verstellrades kann manuell die Temperaturschichtung im Fahrgastraum verändert werden. Eine derartige manuelle "Schichtungsverstellung" bei einer Klimaautomatik wird von manchen Kunden als irritierend und wenig bedienerfreundlich empfunden.

Aufgabe der Erfindung ist es, eine Bedieneinrichtung für eine Fahrzeugklimaautomatikregelung zu schaffen, die mit wenigen Bedienelementen in übersichtlicher Weise eine Anwahl eines angenehmen Fahrgastraumklimas ermöglicht.

Diese Aufgabe wird durch die Merkmale des Patentanspruches gelöst. Vorteilhafte Ausgestaltungen und Weiterbildungen der Erfindung sind den Unteransprüchen zu entnehmen.

Das Grundprinzip der Erfindung besteht in einer "Vier-Zonen-Klimaautomatik" für einen linken oberen, linken unteren, rechten oberen und rechten unteren Fahrgastraumbereich. Jedem dieser vier Fahrgastraumbereiche ist ein Bedienelement zugeordnet. Über die Bedienelemente können für die einzelnen Fahrgastraumbereiche Wunsch- bzw. Soll-Wärmeleistungen angewählt werden, die dann durch eine Klimaelektronik eingeregelt werden. Der Fahrerseite und der Beifahrerseite sind somit genau zwei Bedienelemente zur Anwahl einer gewünschten Wärmeleistung zugeordnet. Jeweils eines zur Temperierung des Fußbereichs und jeweils eines zur Temperierung des Kopfbereichs. Getrennt für die linke und rechte Seite des Fahrgastraums kann also allein durch Betätigen des jeweiligen "oberen" bzw. "unteren" Bedienelements die gewünschte Wärmeleistung angewählt werden und zwar im Unterschied zum Stand der Technik, ohne dass der Automatikmodus verlassen wird. Die Klimaanlage gemäß der Erfindung arbeitet, wenn sie eingeschaltet ist, grundsätzlich immer im Automatikmodus.

Nach einer Weiterbildung der Erfindung ist für die linke und rechte Fahrgastraumseite jeweils ein Bedienelement zum Anwählen eines Luftmengenstroms vorgesehen. Über diese Bedienelemente können Fahrer und Beifahrer jeweils die ihnen zugeführte Gesamtluftmenge vorwählen. In Abhängigkeit von der gewählten Gesamtluftmenge und der gewählten Wärmeleistung für den Kopfbereich und für den Fußbereich regelt die Klimaautomatik für beide Fahrgastraumseiten die Ausströmtemperatur der Luft sowie die Luftmengenaufteilung auf die einzelnen Luftauslässe, d.h. die Klappenstellungen an den einzelnen Luftauslässen.

Um eine möglichst einfache und übersichtliche Bedienung zu erreichen, kann vorgesehen sein, dass die Bedienelemente zum Anwählen der Luftmengenströme jeweils einige wenige diskrete Betriebsstellungen aufweisen. Beispielsweise können eine "Schwach"-. "Mittel"- und "Stark"-Betriebsstellung vorgesehen sein sowie eine Betriebsstellung, in der die Lüftung ausgeschaltet ist sowie eine "Maximal-Stellung".

Vorzugsweise ist den einzelnen Betriebsstellungen jeweils eine "Luftvolumenstrombandbreite" zugeordnet. Die Klimaautomatik regelt dann den Luftvolumenstrom für die jeweilige Fahrgastraumseite innerhalb der angewählten Luftvolumenstrombandbreite. Dies ist ein weiterer wesentlicher Unterschied gegenüber den meisten herkömmlichen Bedienkonzepten. Üblicherweise können nämlich entweder einzelne wenige diskrete Betriebsstellungen angewählt werden, denen jeweils ein fest vorgegebener Luftvolumenstrom zugeordnet ist, oder es sind eine Vielzahl von Luftvolumenstromstellungen anwählbar, denen dann aber ebenfalls jeweils eindeutig ein bestimmter Luftvolumenstrom zugeordnet ist.

Nach einer Weiterbildung der Erfindung können sich die einzelnen Luftvolumenstrombandbreiten teilweise überlappen.

Im folgenden wird die Erfindung anhand eines Ausführungsbeispiels im Zusammenhang mit der Zeichnung näher erläutert. Es zeigen:
- Figur 1: Eine Bedieneinrichtung gemäß dem Stand der Technik; und
- Figur 2: eine Bedieneinrichtung gemäß der Erfindung.

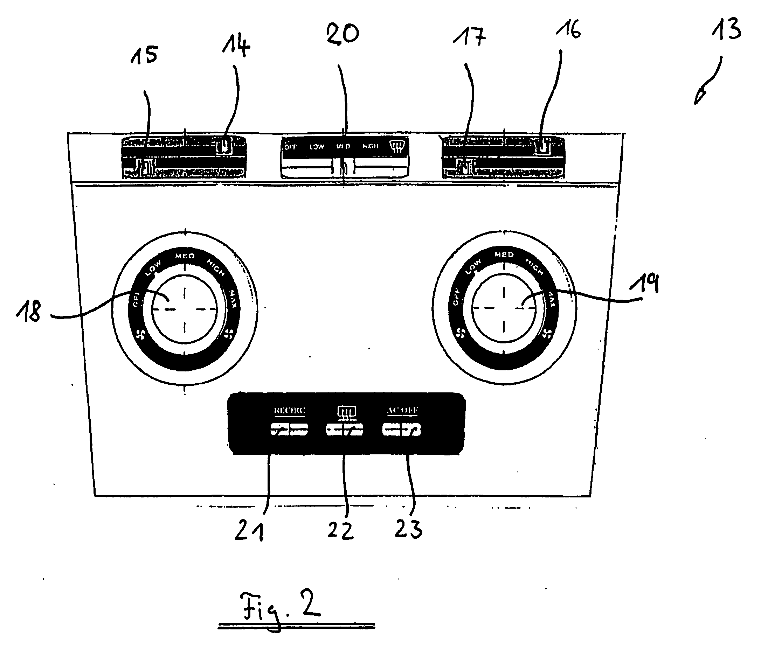

Figur 2 zeigt eine Bedieneinrichtung 13 für eine Fahrzeugklimaautomatik mit einem ersten Bedienelement 14, einem zweiten Bedienelement 15, einem dritten Bedienelement 16 und einem vierten Bedienelement 17. Das erste Bedienelement 14 ist einem oberen linken Fahrgastraumbereich, das Bedienelement 15 einem unteren linken Fahrgastraumbereich, das Bedienelement 16, einem oberen rechten Fahrgastraumbereich und das Bedienelement 17 einem unteren rechten Fahrgastraumbereich zugeordnet. Über die Bedienelemente 14 - 17 kann jeweils eine in dem zugeordneten Fahrgastraumbereich von der Klimaautomatik einzuregelnde Soll-Wärmeleistung angewählt werden.

Femer sind ein fünftes und ein sechstes Bedienelement 18, 19 vorgesehen. Die Bedienelemente 14, 15 sowie 18 sind der linken Fahrgastraumseite, die Bedienelemente 16, 17 und 19 der rechten Fahrgastraumseite zugeordnet. Über das fünfte Bedienelement 18 und das sechste Bedienelement 19 kann für die Fahrer- bzw. Beifahrerseite ein einzuregelnder Gesamtvolumenstrom angewählt werden oder eine Luftvolumenstrombandbreite, wobei die Klimaautomatik dann den Gesamtluftvolumenstrom innerhalb der angewählten Bandbreite einregelt.

Die Bedienelemente 18, 19 weisen jeweils eine "Aus-Stellung" (OFF) eine "Schwach-Stellung" (LOW), eine "Mittel-Stellung" (MED), eine "Stark-Stellung (HIGH) und eine "Maximal-Stellung" (MAX) auf. Den Betriebsstellungen schwach, mittel, stark sind keine fest vorgegebenen Luftvolumenströme zugeordnet, sondern Bandbreiten, innerhalb derer die Klimaautomatik den Gesamt-Luftvolumenstrom für die linke bzw. rechte Fahrgastraumseite regelt.

Um ein angenehmes Fahrgastraumklima zu erhalten, braucht der Fahrer bzw. Beifahrer also lediglich über die oberen Bedienelemente 14, 16 und die unteren Bedienelemente 15, 17 die gewünschte Wärmeleistung für den Kopfbereich bzw. für den Fuß- und Beckenbereich anzuwählen sowie über die Bedienelemente 18, 19 die gewünschte Luftmenge, d.h. den gewünschten Luftvolumenstrom. Die Klimaautomatik regelt dann für jede der beiden Fahrgastraumseiten getrennt für den Kopfbereich und den Fuß- bzw. Beckenbereich entsprechend temperierte Luft ein.

Wenn beispielsweise der Beifahrer seinen Fahrgastraumbereich im Kopfbereich als zu warm empfindet, braucht er lediglich die Stellung des oberen Bedienelements 16 entsprechend zu verändern, was regelungstechnisch einer Veränderung der Führungsgröße für die Soll-Wärmeleistung im oberen rechten Fahrgastraumbereich entspricht. Entsprechendes gilt auch für die übrigen drei Fahrgastraumbereiche.

Ist beispielsweise der Beifahrer mit der Temperatur im Kopf- und Fuß- und Beckenbereich zufrieden, nicht aber mit dem eingeregelten Luftvolumenstrom, so braucht er lediglich am Bedienelement 19 zu drehen und einen schwächeren oder stärkeren einzuregelnden Gesamtluftvolumenstrom anwählen. Die Klimaautomatik erhöht oder verringert dann den Luftvolumenstrom und passt die Temperaturen der ausströmenden Luft entsprechend an, so dass die Wärmeleistung im Kopf- bzw. Fuß- und Beckenbereich im wesentlichen unverändert bleibt.

Die Bedieneinrichtung 13 weist ferner ein Bedienelement 20 auf, über das die gewünschte "Klimatisierung" der Frontscheibe eingestellt werden kann. Das Bedienelement 20 weist fünf Betriebsstellungen auf, nämlich eine Aus-Stellung (OFF), eine Schwach-Stellung (LOW), eine Mittel-Stellung (MED), eine Stark-Stellung (HIGH) sowie eine "Defrost-Stellung". Über das Bedienelement 20 kann die gewünschte Wärmeleistung angewählt werden, die der Frontscheibe zugeführt wird. In der Aus-Stellung sind die Frontscheibenauslässe geschlossen. In der Defrost-Stellung hingegen wird die gesamte zur Verfügung stehende Wärmeleistung der Frontscheibe zugeführt. In den Stellungen LOW, MED, HIGH können entsprechende Soll-Wärmeleistungen für die Frontscheibe angewählt werden. In Abhängigkeit davon und in Abhängigkeit von den Stellungen der Bedienelemente 14 - 17, regelt die Klimaautomatik die Temperatur und Luftvolumenstromaufteilung auf die übrigen Luftauslässe.

Vollständigkeitshalber sei noch auf drei weitere Bedienelemente 21, 22, 23 hingewiesen. Über das Bedienelement 21 kann die Klimaautomatik in "Umluftbetrieb" geschaltet werden. D.h., die im Fahrzeug befindliche Luft wird lediglich umgewälzt und temperiert. Außenluft wird jedoch nicht in den Fahrgastraum gesaugt.

Mit dem Bedienelement 22 kann eine Heckscheibenheizung eingeschaltet werden.

Mit dem Bedienelement 13 kann der Kompressor der Klimaanlage ausgeschaltet werden. Diese Funktion bietet sich insbesondere für Luxus-Fahrzeuge an, bei denen der Kompressor grundsätzlich immer mitläuft und nur in Ausnahmefällen manuell ausgeschaltet wird.

## Patentansprüche

1. Bedienungseinrichtung für Fahrzeugklimaanlagen, mit Bedienelementen (14 - 17) zum Anwählen von Klimatisierungsparametern, und mit einer Klimaautomatikregelung wobei als Klimatisierungsparameter Wärmeleistungen und Luftmengenströme anwählbar sind und jeweils die vier Fahrgastraumbereichen zugeführte Wärmeleistung durch die Klimaautomatikregelung separat regelbar ist, wobei ein erstes Bedienelement (14) zum Anwählen einer in einem oberen linken Fahrgastraumbereich einzuregelnden Wärmeleistung vorgesehen ist, ein zweites Bedienelement (15) zum Anwählen einer in einem unteren linken Fahrgastraumbereich einzuregelnden Wärmeleistung,
ein drittes Bedienelement (16) zum Anwählen einer in einem oberen rechten Fahrgastraumbereich einzuregelnden Wärmeleistung und
ein viertes Bedienelement (17) zum Anwählen einer in einem unteren rechten Fahrgastraumbereich einzuregelnden Wärmeleistung, und wobei ein fünftes Bedienelement (18) zum Anwählen eines Luftmengenstroms für den linken Fahrgastraumbereich und ein sechstes Bedienelement (19) zum Anwählen eines Luftmengenstroms für den rechten Fahrgastraumbereich vorgesehen ist,
**dadurch gekennzeichnet, dass**
die Klimaautomatikregelung die Temperatur von Luftströmungen, die zur Klimatisierung des oberen linken, unteren linken, oberen rechten und unteren rechten Fahrgastraum eingesteuert werden, in Abhängigkeit von den für den oberen linken, unteren linken, oberen rechten und unteren rechten Fahrgastraumbereich angewählten Wärmeleistungen und den für den linken und den rechten Fahrgastraumbereich angewählten Luftmengenströmen regelt.

2. Bedienungseinrichtung nach Anspruch 1, wobei das fünfte und sechste Bedienelement (18, 19) jeweils mehrere diskrete Betriebsstellungen aufweisen.

3. Bedienungseinrichtung nach einem der Ansprüche 1 oder 2, wobei einzelnen Betriebsstellungen des fünften und sechsten Bedienelements (18, 19) jeweils eine Luftvolumenstrombandbreite zugeordnet ist, innerhalb der die Klimaautomatik den Luftvolumenstrom für den linken bzw. rechten Fahrgastraumbereich einregelt.

4. Bedienungseinrichtung nach einem der Ansprüche 1 bis 3, wobei das fünfte und das sechste Bedienelement (18, 19) drei Betriebsstellungen aufweisen, denen unterschiedliche Luftvolumenstrombandbreiten zugeordnet sind, nämlich schwach, mittel und stark.

5. Bedienungseinrichtung nach Anspruch 3 oder 4, wobei sich die Luftvolumenstrombandbreiten teilweise überlappen.

6. Bedienungseinrichtung nach einem der Ansprüche 3 bis 5, wobei das fünfte und das sechste Bedienelement (18, 19) jeweils zwei weitere Stellungen aufweisen, nämlich eine Aus-Stellung und eine Maximal-Stellung.

7. Bedienungseinrichtung nach einem der Ansprüche 1 bis 6, wobei ein Bedienelement (20) zur Klimatisierung von Fahrgastraumscheiben vorgesehen ist, über das eine an den Fahrgastraumscheiben von der Klimaautomatikregelung einzuregelnde Wärmeleistung anwählbar ist, um einen Scheibenbeschlag bzw. Scheibenvereisung zu vermeiden bzw. abzubauen.

8. Bedienungseinrichtung nach Anspruch 7, wobei das Bedienelement (20) zur Klimatisierung von Fahrgastraumscheiben eine Defrost-Stellung aufweist, in der die gesamte zur Verfügung stehende Wärmeleistung Fahrgastraumscheibenluftauslässen zugeführt wird, wobei in der Defrost-Stellung die Fahrgastraumregelung deaktiviert ist und
mindestens eine weitere Betriebsstellung in der den Fahrgastraumscheibenluftauslässen eine manuell über das Bedienelement (20) zur Klimatisierung von Fahrgastraumscheiben vorgebbare Wärmeleistung zugeführt wird und die Fahrgastraumklimatisierung entsprechend den Stellungen der ersten, zweiten, dritten, vierten, fünften und sechsten Bedienelemente geregelt wird.

9. Bedienungseinrichtung nach einem der Ansprüche 1 bis 8, wobei das erste, zweite, dritte und vierte Bedienelement jeweils durch ein analog zu verstellendes Stellscheibensegment oder durch ein Stellrad gebildet sind.

10. Bedienungseinrichtung nach Anspruch 9, wobei die dem linken Fahrgastraumbereich bzw. dem rechten Fahrgastraumbereich zugeordneten Stellscheibensegmente oder Stellräder jeweils koaxial angeordnet sind.

11. Bedienungseinrichtung nach einem der Ansprüche 9 oder 10, wobei die Bedienelemente (14, 16) für den oberen Fahrgastraumbereich in Bezug auf eine Vertikalrichtung des Fahrgastraumes oberhalb dem jeweils zugeordneten Bedienelement (15, 17) für den unteren Fahrgastraumbereich angeordnet sind.

## Claims

1. An operating device for vehicle air-conditioning systems, comprising operating elements (14 - 17) for selecting air-conditioning parameters and an automatic air-conditioning control unit, wherein the selectable air-conditioning parameters are thermal outputs and air flow rates and the thermal output supplied to four passenger compartments are separately adjustable by the automatic units, wherein
a first control element (14) is provided for selecting an adjustable thermal output in a top left passenger compartment,
a second control element (15) is provided for selecting an adjustable thermal output in a bottom left passenger compartment,
a third control element (16) is provided for selecting an adjustable thermal output in a top right passenger compartment and
a fourth operating element (17) is provided for selecting an adjustable thermal output in a bottom right passenger compartment, and wherein a fifth operating element (18) is provided for selecting an air flow rate for the left passenger compartment and a sixth operating element (19) for selecting an air flow rate for the right passenger compartment,
**characterised in that**
the automatic air-conditioning unit sets the temperature of air flows for conditioning the top left, bottom left, top right and bottom right passenger compartment in dependence on the thermal outputs selected for the top left, bottom left, top right and bottom left passenger compartment and the air flow rate selected for the left and the right passenger compartment.

2. An operating device according to claim 1, wherein the fifth and the sixth operating element (18, 19) each have a number of discrete operating positions.

3. An operating device according to claim 1 or 2, wherein individual operating positions of the fifth and sixth operating element (18, 19) are associated with respective air flow-rate bandwidths within which the automatic unit sets the air flow rate for the left or right passenger compartment.

4. An operating device according to any of claims 1 to 3, wherein the fifth and the sixth operating element (18, 19) have three operating positions associated with different air flow-rate bandwidths, that is low, medium and high.

5. An operating device according to claim 3 or 4, wherein the air flow-rate bandwidth partly overlap.

6. An operating device according to any of claims 3 to 5, wherein the fifth and the sixth operating element (18, 19) each have two additional positions, that is an off position and a maximum position.

7. An operating device according to any of claims 1 to 6, wherein an operating element (20) is provided for air-conditioning the passenger-compartment windows, and can be used to select a thermal output for the passenger-compartment windows, adjustable by the automatic air-conditioning unit, in order to avoid or remove condensation or ice on the windows.

8. An operating device according to claim 7, wherein the operating element (20) for air-conditioning the passenger-compartment windows has a defrost position in which all the available thermal output is supplied to the passenger-compartment window air outlets, the passenger-space control unit being inactivated in the defrost position, and also has
at least one additional operating position in which the passenger-space window air outlets are manually supplied with a thermal output settable by the operating element (20) for air-conditioning the passenger-compartment windows, and the passenger-space air-conditioning unit is adjusted in accordance with the positions of the first, second, third, fourth, fifth and sixth operating elements.

9. An operating device according to any of claims 1 to 8, wherein the first, second, third and fourth operating elements are each in the form of an analogically adjustable wheel or disc segment.

10. An operating device according to claim 9, wherein the adjusting wheels or disc segments associated with the left passenger-space region or right passenger-space region are coaxially disposed.

11. An operating device according to claim 9 or 10, wherein the operating elements (14, 16) for the top passenger-space region are disposed above the respective associated operating element (15, 17) for the bottom passenger-space region, relative to a vertical direction through the passenger space.

## Revendications

1. Dispositif de commande pour des installations de climatisation de véhicules, comprenant des éléments de commande (14 - 17) permettant de sélectionner des paramètres de climatisation et comprenant une régulation de climatisation automatique, des puissances de chauffage et des débits d'air pouvant être sélectionnés en tant que paramètres de climatisation et la puissance de chauffage respectivement envoyée aux quatre zones de l'habitacle est réglable séparément par la régulation de climatisation automatique, et il est prévu
- un premier élément de commande (14) pour sélectionner une puissance de chauffage pour la zone supérieure gauche de l'habitacle,
- un deuxième élément de commande (15) pour sélectionner une puissance de chauffage pour la zone inférieure gauche de l'habitacle,
- un troisième élément de commande (16) pour sélectionner une puissance de chauffage pour la zone supérieure droite de l'habitacle,
- un quatrième élément de commande (17) pour sélectionner une puissance de chauffage pour la zone inférieure droite de l'habitacle,
- un cinquième élément de commande (18) pour sélectionner un débit d'air pour la zone gauche de l'habitacle, et
- un sixième élément de commande (19) pour sélectionner un débit d'air pour la zone droite de l'habitacle,
**caractérisé en ce que**
la régulation de climatisation automatique règle la température de flux d'air activé pour la climatisation de la zone supérieure gauche, inférieure gauche, supérieure droite et inférieure droite de l'habitacle, en fonction des puissances de chauffage sélectionnées pour la zone supérieure gauche, inférieure gauche, supérieure droite et inférieure droite de l'habitacle et des débits d'air sélectionnés pour la zone gauche et la zone droite de l'habitacle.

2. Dispositif de commande selon la revendication 1,
dans lequel
les cinquième et sixième éléments de commande (18, 19) présentent chacun plusieurs positions de fonctionnement discrètes.

3. Dispositif de commande selon l'une des revendications 1 ou 2,
dans lequel
une plage de débit d'air est respectivement associée aux positions de fonctionnement individuelles du cinquième et du sixième élément de commande (18, 19), plage au sein de laquelle la climatisation automatique règle le débit d'air pour la zone gauche ou droite de l'habitacle.

4. Dispositif de commande selon l'une des revendications 1 à 3,
dans lequel
les cinquième et sixième éléments de commande (18, 19) présentent trois positions de fonctionnement auxquelles sont associées différentes plages de débit d'air, ces positions étant les positions faible, moyenne et forte.

5. Dispositif de commande selon la revendication 3 ou 4,
dans lequel
les plages de débit d'air se chevauchent partiellement.

6. Dispositif de commande selon l'une des revendications 3 à 5.
dans lequel
les cinquième et sixième éléments de commande (18, 19) présentent chacun une position désactivée et une position maximale.

7. Dispositif de commande selon l'une des revendications 1 à 6,
dans lequel
il est prévu un élément de commande (20) pour la climatisation des vitres de l'habitacle, permettant de sélectionner une puissance de chauffage réglée par la régulation de climatisation automatique afin d'éviter ou d'éliminer la buée ou le givre sur les vitres.

8. Dispositif de commande selon la revendication 7,
dans lequel
l'élément de commande (20) pour la climatisation des vitres de l'habitacle présente une position de dégivrage, dans laquelle la totalité de la puissance de chauffage disponible est envoyée vers des sorties d'air orientées vers les vitres, la régulation de l'habitacle étant désactivée dans cette position de dégivrage, et
au moins une autre position de fonctionnement, dans laquelle une puissance de chauffage pouvant être prédéterminée manuellement par l'élément de commande (20) est envoyée par les sorties d'air orientées vers les vitres pour leur climatisation et la climatisation de l'habitacle est réglée conformément aux positions des premier, deuxième, troisième, quatrième, cinquième et sixième éléments de commande.

9. Dispositif de commande selon l'une des revendications 1 à 8,
dans lequel
les premier, deuxième, troisième et quatrième éléments de commande sont formés par un segment de rondelle pouvant être déplacé de manière analogue ou par une molette.

10. Dispositif de commande selon la revendication 9,
dans lequel
les segments de rondelle ou molettes associés à la zone gauche ou à la zone droite de l'habitacle sont respectivement disposés de façon coaxiale.

11. Dispositif de commande selon l'une des revendications 9 ou 10,
dans lequel
les éléments de commande (14, 16) pour la zone supérieure de l'habitacle, par rapport à une direction verticale de celui-ci, sont disposés au-dessus de l'élément de commande respectivement associé (15, 17) pour la zone inférieure de l'habitacle.
